# EUROPÄISCHE PATENTSCHRIFT

(11) **EP 3 664 913 B1**
(45) Veröffentlichungstag und Bekanntmachung des Hinweises auf die Patenterteilung: **18.08.2021**
(21) Anmeldenummer: 18740110.4
(22) Anmeldetag: 22.06.2018
(51) Int. Cl.: B01D 46/00, B01D 46/10

(54) **FILTERELEMENT FÜR EINEN LUFTFILTER EINES KRAFTWAGENS UND LUFTFILTER**
FILTER ELEMENT FOR AN AIR FILTER OF A MOTOR VEHICLE, AND AIR FILTER
ÉLÉMENT FILTRE POUR FILTRE À AIR D'UN VÉHICULE AUTOMOBILE ET FILTRE À AIR

(30) Priorität: 08.08.2017 DE 102017007498
(43) Veröffentlichungstag der Anmeldung: 17.06.2020
(73) Patentinhaber: Daimler AG, 70372 Stuttgart (DE)
(72) Erfinder: SCHUMACHER, Eric, 70565 Stuttgart (DE)
(74) Vertreter: JENSEN & SON
(86) Internationale Anmeldenummer: PCT/EP2018/066700
(87) Internationale Veröffentlichungsnummer: WO 2019/029888

(56) Entgegenhaltungen:
- EP-A2- 1 172 240
- DE-A1-102007 063 252
- DE-A1-102008 040 319
- DE-A1-102014 005 734
- DE-A1-102015 003 297
- DE-B3-102009 048 412
- US-A1- 2014 360 929

## Beschreibung

Die Erfindung betrifft ein Filterelement für einen Luftfilter eines Kraftwagens, mit einem Rahmenteil, welches ein Filtermaterial des Filterelements zumindest bereichsweise umgibt. Das Filterelement ist in einen Aufnahmeraum einbringbar, welcher durch ein Gehäuse des Luftfilters bereitgestellt ist. Des Weiteren betrifft die Erfindung einen Luftfilter mit einem solchen Filterelement.

Die DE 10 2007 063 252 A1 beschreibt einen Einschubluftfilter in einem Klimagerät eines Fahrzeugs. Hierbei ist ein Einschubrahmen mit einem Luftfilter um eine Krümmungsachse biegbar, welche parallel zur Einschubebene und senkrecht zur Einschubrichtung ausgerichtet ist. Durch diese Biegbarkeit des Einschubrahmens soll erreicht werden, dass der Einschubluftfilter auch bei beengten Platzverhältnissen beziehungsweise bei Vorliegen von wenig Freiraum erleichtert in das Klimagerät eingeschoben werden kann.

Des Weiteren ist es aus dem Stand der Technik bekannt, einen durch ein Gehäuse eines Luftfilters gebildeten Aufnahmeraum für ein Filterelement des Luftfilters mittels eines Deckels zu verschließen. Hierbei kann der Deckel beispielsweise durch Verschrauben an dem Gehäuse des Luftfilters festgelegt werden.

Es gestaltet sich jedoch als schwierig zu kontrollieren, ob das Filterelement in das Gehäuse des Luftfilters eingebaut wurde, wenn eine Einführöffnung des Aufnahmeraums mittels des Deckels verschlossen ist.

Aufgabe der vorliegenden Erfindung ist es daher, ein Filterelement der eingangs genannten Art zu schaffen, welche es ermöglicht, auch bei mittels eines Deckelelements verschlossenem Aufnahmeraum einfach festzustellen, ob das Filterelement in dem Luftfilter verbaut wurde, und einen Luftfilter mit einem solchen Filterelement bereitzustellen.

Diese Aufgabe wird durch ein Filterelement mit den Merkmalen des Patentanspruchs 1 und durch einen Luftfilter mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Das erfindungsgemäße Filterelement für einen Luftfilter eines Kraftwagens weist ein Rahmenteil auf, welches ein Filtermaterial des Filterelements zumindest bereichsweise umgibt. Das Filterelement ist in einen Aufnahmeraum einbringbar, welcher durch ein Gehäuse des Luftfilters bereitgestellt ist. Das Filterelement weist wenigstens ein Halteelement auf, welches durch das Einbringen des Filterelements in den Aufnahmeraum aus einer Ausgangsstellung in eine Funktionsstellung verbringbar ist. In der Funktionsstellung ist wenigstens ein Befestigungselement an dem wenigstens einen Halteelement fixierbar. Das wenigstens eine Befestigungselement ist zum Festlegen eines Deckelelements an dem Gehäuse ausgebildet. Das Deckelelement dient dem Verschließen einer Einführöffnung des Aufnahmeraums. Es kann also das Deckelelement mittels des wenigstens einen Befestigungselements lediglich dann zum Verschließen der Einführöffnung des Aufnahmeraums an dem Gehäuse des Luftfilters festgelegt werden, wenn das wenigstens eine Halteelement in die Funktionsstellung verbracht ist. Erst wenn das wenigstens eine Halteelement aus der Ausgangsstellung in die Funktionsstellung verbracht ist, ist somit ein Fixieren des wenigstens einen Befestigungselements an dem wenigstens einen Halteelement möglich.

Diese Konstruktion des Filterelements ermöglicht es folglich, bei mittels des Deckelelements verschlossenem Aufnahmeraum auf einfache Weise festzustellen, ob das Filterelement verbaut oder in den Luftfilter eingebaut wurde: Denn um das Deckelelement an dem Gehäuse befestigen zu können, ist zunächst das Filterelement in den Aufnahmeraum einzubringen beziehungsweise einzuführen. Aufgrund dieses Einbringens wird das wenigstens eine Halteelement beziehungsweise eine solche Halterung oder ein solches Gegenstück für das auf Seiten des Deckelelements vorgesehene Befestigungselement aus der Ausgangsstellung in die Funktionsstellung verbracht beziehungsweise bewegt. Mit anderen Worten richtet sich das wenigstens eine Halteelement aufgrund des Einbringens des Filterelements in den Aufnahmeraum derart aus, dass das wenigstens eine Befestigungselement an dem wenigstens einen Halteelement fixiert werden kann. Es kann dementsprechend der Luftfilter nur mit eingebautem Filterelement betrieben werden. Denn eine Montage des Deckelelements an das Gehäuse des Luftfilters ist nicht möglich, wenn kein Filterelement in den Aufnahmeraum des Luftfilters eingebaut ist. Folglich wird es auch bemerkt, wenn das Filterelement fehlen sollte.

Soll also beispielsweise aufgrund einer Verschmutzung des Filtermaterials des Filterelements das Filterelement getauscht beziehungsweise ausgetauscht werden, so ist das Einführen des neuen Filterelements in den Aufnahmeraum des Luftfilters für das Montieren des Deckelelements an das Gehäuse des Luftfilters erforderlich. Es findet also auf besonders einfache Art eine Kontrolle statt, ob das Filterelement verbaut wurde.

Vorzugsweise ist das wenigstens eine Halteelement mittels eines flexiblen Verbindungsstegs an dem Rahmenteil gehalten. Hierbei ist durch ein Verformen des Verbindungsstegs das wenigstens eine Halteelement aus seiner Ausgangsstellung in die Funktionsstellung verbringbar. So kann auf besonders einfache und zuverlässige Weise durch das Einbringen des Filterelements in den Aufnahmeraum das Verbringen des wenigstens einen Halteelements aus der Ausgangsstellung in die Funktionsstellung bewerkstelligt werden. Insbesondere kann der flexible Verbindungssteg elastisch verformbar sein, etwa indem der Verbindungssteg nach Art eines Filmscharniers ausgebildet ist. Dann bewegt sich der Verbindungssteg selbsttätig aus der Funktionsstellung in die Ausgangsstellung zurück, wenn das Filterelement aus dem Aufnahmeraum entnommen wird.

Vorzugsweise bildet das wenigstens eine Halteelement in der Ausgangsstellung einen ersten Winkel mit einer Seitenwand des Rahmenteils, wobei die Seitenwand sich in eine Einführrichtung des Filterelements erstreckt. In die Einführrichtung ist das Filterelement in den Aufnahmeraum einbringbar. Hierbei bildet das wenigstens eine Halteelement in der Funktionsstellung einen zweiten Winkel mit der Seitenwand, welcher größer ist als der erste Winkel. Mit anderen Worten schließt eine gedachte Mittelebene, welche durch das Halteelement verläuft und welche die Seitenwand in einer Linie schneidet, die mit einer Hochrichtung der Seitenwand zusammenfällt, den ersten Winkel beziehungsweise den zweiten Winkel mit der Seitenwand ein. So kann einerseits ein leichtes und prozesssicheres Einbringen des Filterelements in den Aufnahmeraum sichergestellt werden. Bei diesem Einbringen oder Einsetzen bewegt sich das wenigstens eine Halteelement, beispielsweise mittels einer Führungseinrichtung geführt, automatisch aus der Ausgangsstellung in die Funktionsstellung. Die Führungseinrichtung ist bevorzugt durch das Gehäuse des Luftfilters bereitgestellt. Des Weiteren kann so erreicht werden, dass das Halteelement in der Funktionsstellung ein Gehäuseteil des Gehäuses hintergreift beziehungsweise hinterschnittig umfasst.

Insbesondere kann das wenigstens eine Halteelement in der Funktionsstellung im Wesentlichen senkrecht zu der Seitenwand ausgerichtet sein. Dies erleichtert das Fixieren des Deckelelements an dem Gehäuse des Luftfilters mittels des wenigstens einen Befestigungselements.

Das wenigstens eine Halteelement kann ein als Innengewinde ausgebildetes Schraubgewinde aufweisen. Dementsprechend kann als Befestigungselement ein Schraubbolzen vorgesehen sein, welcher lediglich dann in das Innengewinde eingeschraubt werden kann, wenn das Innengewinde in die Funktionsstellung verbracht ist.

Alternativ kann das wenigstens eine Halteelement eine Aufnahme für zumindest einen an dem Befestigungselement ausgebildeten Stift aufweisen. Auf diese Weise kann eine Befestigung des Deckelelements an dem Gehäuse des Luftfilters nach Art eines Bajonettverschlusses bereitgestellt werden. Der zumindest eine an dem Befestigungselement ausgebildete Stift wird (dem Prinzip des Bajonettverschlusses entsprechend) durch Rotation eines Schaftteils des Befestigungselements in die Aufnahme eingebracht. An dem Schaftteil ist der zumindest eine Stift angeordnet. So kann besonders rasch und sicher das Deckelelement an dem Gehäuse des Luftfilters festgelegt werden.

Alternativ kann das wenigstens eine Halteelement ein Rastelement aufweisen, welches für ein korrespondierendes Rastelement des Befestigungselements beziehungsweise zum Zusammenwirken mit dem korrespondierenden Rastelement des Befestigungselements ausgebildet ist. Auch bei dieser Ausgestaltung ist eine besonders einfache und rasche Festlegung des Deckelelements an dem Gehäuse des Luftfilters zu erreichen, wenn das wenigstens eine Halteelement in die Funktionsstellung verbracht ist.

Der erfindungsgemäße Luftfilter für einen Kraftwagen umfasst ein erfindungsgemäßes Filterelement, wobei das Filterelement in einen Aufnahmeraum eingebracht ist, welcher durch ein Gehäuse des Luftfilters bereitgestellt ist. Durch das Fixieren wenigstens eines Befestigungselements an dem wenigstens einen Halteelement des Filterelements ist ein Deckelelement an dem Gehäuse festgelegt. Mittels des Deckelelements ist eine Einführöffnung des Aufnahmeraums verschlossen. Hierbei kann der Luftfilter insbesondere als Luftfilter einer Klimaanlage beziehungsweise Belüftungseinrichtung des Kraftwagens ausgebildet sein. Des Weiteren kann der Luftfilter für einen Ansaugtrakt eines Verbrennungsmotors des Kraftwagens vorgesehen sein.

Vorzugsweise ist das Deckelelement als separate, vor einem Entnehmen des Filterelements aus dem Aufnahmeraum von der Einführöffnung entfernbare Verschlusseinrichtung für den Aufnahmeraum ausgebildet. Insbesondere bei einer solchen Ausgestaltung, bei welcher das Deckelelement nicht an dem Filterelement gehalten oder einstückig mit dem Filterelement ausgebildet ist, ist die durch die Ausgestaltung des Filterelements ermöglichte Kontrolle eines Verbaus des Filterelements besonders vorteilhaft.

Vorzugsweise weist das Gehäuse wenigstens eine Führungseinrichtung auf, wobei durch Einführen des wenigstens einen Halteelements in die wenigstens eine Führungseinrichtung das wenigstens eine Halteelement aus der Ausgangsstellung in die Funktionsstellung verbringbar ist. Beispielsweise kann das wenigstens eine Halteelement beim Einführen des Filterelements in den Aufnahmeraum einem gekrümmten Verlauf der Führungseinrichtung folgen und so aus der Ausgangsstellung in die Funktionsstellung bewegt werden. Durch Vorsehen einer derartigen Führungseinrichtung oder Führungskulisse lässt sich das Halteelement einfach und prozesssicher ausrichten.

Als weiter vorteilhaft hat es sich gezeigt, wenn das wenigstens eine Halteelement in der Funktionsstellung ein Gehäuseteil des Gehäuses hintergreift. Hierbei ist in dem Gehäuseteil eine Durchtrittsöffnung ausgebildet. Ein Schaftteil des wenigstens einen Befestigungselements ist durch die Durchtrittsöffnung hindurchgeführt, wenn das wenigstens eine Befestigungselement an dem wenigstens einen Halteelement fixiert ist. So ist eine besonders sichere Fixierung des Filterelements in dem Aufnahmeraum einerseits und des Deckelelements an dem Gehäuse des Luftfilters andererseits erreichbar.

Das Schaftteil des wenigstens einen Befestigungselements kann ein Schraubgewinde aufweisen, welches in ein Halteelement mit einem Innengewinde eingeschraubt werden kann, um das Deckelelement sicher an dem Gehäuse zu fixieren.

Alternativ kann das Schaftteil zumindest einen durch Drehen des Schaftteils in eine Aufnahme einbringbaren Stift aufweisen. Auch so kann eine rotatorische, jedoch nach Art eines Bajonettverschlusses ausgebildete, Verriegelung beim Festlegen des Deckelelements an dem Gehäuse des Luftfilters erreicht werden. Hierbei braucht das Befestigungselement allerdings nur geringfügig verdreht zu werden, beispielsweise um eine viertel Umdrehung, um das Deckelelement an dem Gehäuse des Luftfilters zu fixieren.

Schließlich hat es sich als vorteilhaft gezeigt, wenn das Schaftteil um eine Schwenkachse verschwenkbar ist, welche senkrecht zu einer Längserstreckungsrichtung des Schaftteils verläuft. Hierbei ist durch das Verschwenken des Schaftteils um die Schwenkachse das Befestigungselement in eine Freigabestellung bewegbar, in welcher die Fixierung des Befestigungselements an dem Halteelement aufgehoben ist. Auch durch eine solche translatorische Verriegelung lässt sich eine besonders einfache und prozesssichere Festlegung des Deckelelements an dem Gehäuse des Luftfilters (und ein entsprechendes Lösen des Deckelelements von dem Gehäuse) erreichen.

Die für das erfindungsgemäße Filterelement beschriebenen Vorteile und bevorzugten Ausführungsformen gelten auch für den erfindungsgemäßen Luftfilter und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung.

Dabei zeigen:
- Fig. 1: perspektivisch ein Filterelement für einen Luftfilter einer Klimaanlage eines Kraftwagens, wobei an einem Rahmen des Filterelements flexible Halteelemente angeordnet sind;
- Fig. 2: perspektivisch ein Gehäuse des Luftfilters, durch welches ein Aufnahmeraum für das Filterelement gemäß Fig. 1 bereitgestellt ist;
- Fig. 3: perspektivisch zwei Gehäusehälften, aus welchen das in Fig. 2 gezeigte Gehäuse aufgebaut ist;
- Fig. 4: in einer vergrößerten Detaildarstellung einen Ausschnitt des Filterelements gemäß Fig. 1;
- Fig. 5: ein Deckelelement zum Verschließen einer Einführöffnung des Aufnahmeraums für das Filterelement gemäß Fig. 1 in einer ersten Perspektivansicht;
- Fig. 6: das Deckelelement gemäß Fig. 5 in einer weiteren Perspektivansicht;
- Fig. 7: einen ersten Schritt beim Einbringen des Filterelements gemäß Fig. 1 in das Gehäuse gemäß Fig. 2, wobei lediglich ein Gehäuseunterteil des Gehäuses gemäß Fig. 2 gezeigt ist;
- Fig. 8: einen weiteren Schritt während der Montage beziehungsweise während dem Einführen des Filterelements in das Gehäuse;
- Fig. 9: das Filterelement gemäß Fig. 1 in seiner Endlage beziehungsweise Endposition in dem Gehäuse gemäß Fig. 2, wobei ein über ein Filmscharnier an einem Rahmen des Filterelements gehaltenes Innengewinde in eine Funktionsstellung verbracht ist, in welcher eine an dem Deckelelement angeordnete Schraube in das Innengewinde eingeschraubt werden kann;
- Fig. 10: die Befestigung des Deckelelements gemäß Fig. 5 an dem Gehäuse gemäß Fig. 2 durch Einschrauben der an dem Deckelelement angeordneten Schrauben in die an dem Filterelement ausgebildeten Innengewinde;
- Fig. 11: in einer ausschnittsweise gezeigten Draufsicht von links nach rechts die Schritte während des Verbringens eines der Halteelemente aus einer Ausgangsstellung in die Funktionsstellung, in welcher eine der Schrauben in das Halteelement eingeschraubt werden kann;
- Fig. 12: eine Variante des an dem Filterelement ausgebildeten Halteelements, wobei eine rotatorische Verriegelung nach Art eines Bajonettverschlusses ermöglicht ist, und wobei von links nach rechts die Schritte einer Demontage des Deckelelements von dem Gehäuse veranschaulicht sind;
- Fig. 13: in einer Perspektivansicht ein weiteres, alternatives Deckelelement, bei welchem eine translatorische Verriegelung mittels zweier Rastclipse vorgesehen ist;
- Fig. 14: ein Verkippen eines der Rastclipse in die Demontagestellung zum Lösen des Deckelelements gemäß Fig. 13; und
- Fig. 15: in einer teilweise geschnittenen Detailansicht die Schritte beim Lösen des Deckelelements gemäß Fig. 13 von dem Gehäuse gemäß Fig. 2, wobei ein an dem Filterelement gemäß Fig. 1 ausgebildetes Halteelement eine Rastnase umfasst.

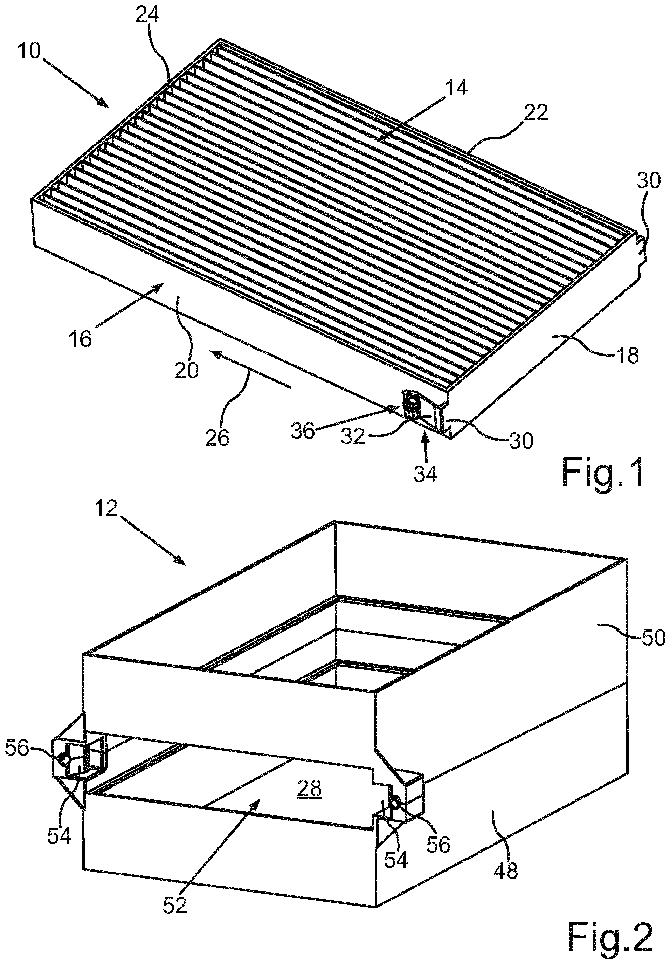

Fig. 1 zeigt perspektivisch ein Filterelement 10, wie es zum Einbau in ein Gehäuse 12 (vergleiche Fig. 2) eines Luftfilters beispielsweise einer Klimaanlage eines Kraftwagens vorgesehen ist. Ein Filtermaterial 14 des Filterelements 10 ist vorliegend beispielhaft als Faltenfilter ausgebildet. Das Filtermaterial 14 ist von einem Rahmenteil 16 umfangsseitig umgeben, welches eine vordere Stirnwand 18, an die vordere Stirnwand 18 angrenzende Seitenwände 20, 22 und eine rückwärtige Stirnwand 24 umfasst. Die Seitenwände 20, 22 erstrecken sich in eine Einführrichtung 26, welche in Fig. 1 durch einen Pfeil veranschaulicht ist. In diese Einführrichtung 26 kann das Filterelement 10 in einen Aufnahmeraum 28 eingebracht beziehungsweise eingeschoben werden, welcher durch das Gehäuse 12 bereitgestellt ist (vergleiche Fig. 2). Insbesondere in Einführrichtung 26 betrachtet handelt es sich bei der in Fig. 1 dem Betrachter näheren Stirnwand 18 um die vordere Stirnwand 18 des Filterelements 10 und bei der dem Betrachter ferneren Stirnwand 24 um die rückwärtige Stirnwand 24 des Filterelements 10.

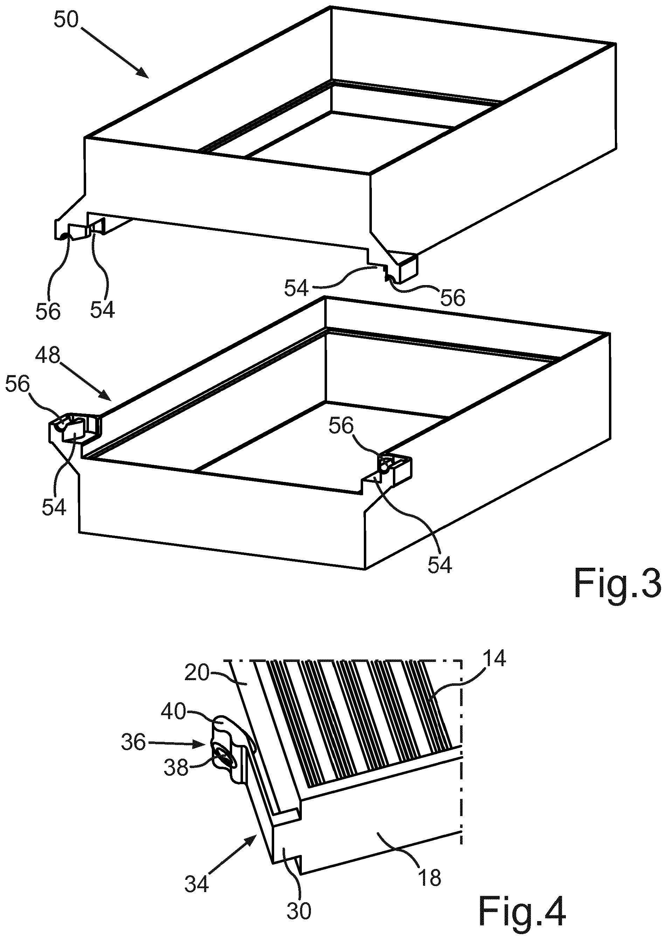

An der jeweiligen Seitenwand 20, 22 ist ein in Einführrichtung 26 bündig mit der vorderen Stirnwand 18 abschließender Fortsatz 30 angeordnet, welcher bevorzugt einstückig mit dem Rahmenteil 16 ausgebildet und in Fig. 4 vergrößert dargestellt ist. In der Ebene der Stirnwand 18 steht der Fortsatz 30 über die Seitenwand 20, 22 über. Eine Wandstärke des Fortsatzes 30 kann insbesondere im Wesentlichen der Wandstärke der vorderen Stirnwand 18 entsprechen. Von diesem Fortsatz 30 aus erstreckt sich in die Einführrichtung 26 eine Lasche 32 im Wesentlichen parallel zur jeweiligen Seitenwand 20, 22. Die Lasche 32 weist eine geringere Wandstärke auf als der Fortsatz 30. Durch den Fortsatz 30 und die Lasche 32 ist ein flexibler Verbindungssteg 34 nach Art eines Filmscharniers bereitgestellt, an welchem ein Halteelement 36 gehalten ist.

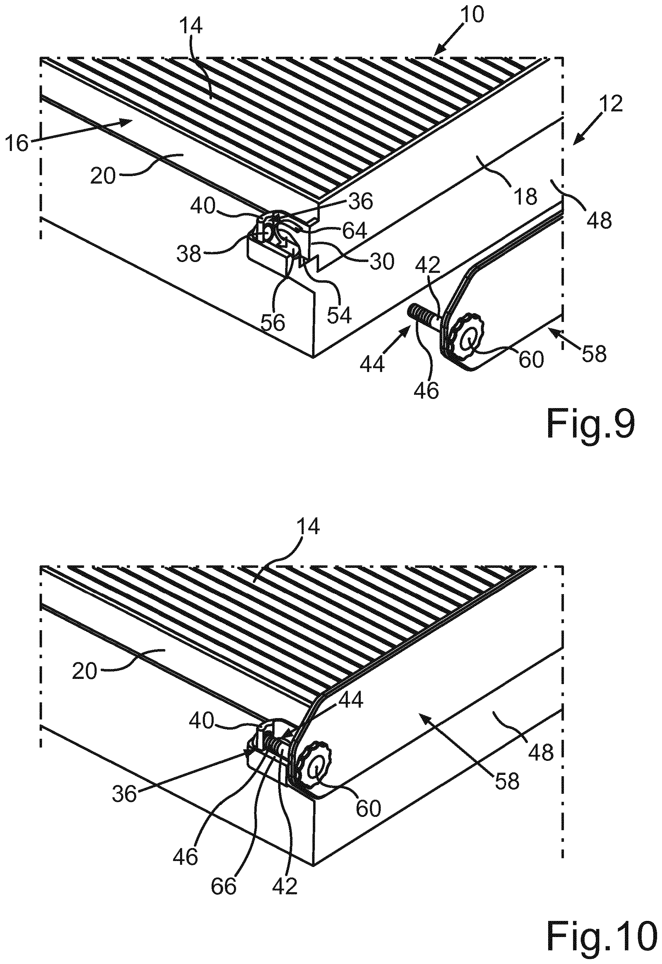

Bei der in Fig. 1 beispielhaft gezeigten Variante des Filterelements 10 weist das Halteelement 36 ein Innengewinde 38 auf, welches in einem verdickten, also eine vergrößerte Wandstärke aufweisenden Endbereich 40 des Verbindungsstegs 34 ausgebildet ist. Mit anderen Worten ist das Halteelement 36 über ein Filmscharnier an dem Rahmenteil 16 beziehungsweise am Filterrahmen befestigt. Entsprechend ist das Halteelement 36 aufgrund der geringeren Wandstärke der Lasche 32 flexibel ausgebildet. Es kann also das Halteelement 36 aus einer in Fig. 1 gezeigten Ausgangsstellung in eine in Fig. 9 gezeigte Funktionsstellung verbracht werden. In dieser Funktionsstellung kann gemäß Fig. 9 und Fig. 10 ein Schaft 42 einer Schraube 44 in das Innengewinde 38 eingeschraubt werden, welches in dem Endbereich 40 ausgebildet ist. Hierfür weist der Schaft 42 der Schraube 44 ebenfalls ein Schraubgewinde 46 auf (vergleiche Fig. 9).

Aus Fig. 2 ist ersichtlich, dass das Gehäuse 12 ein Gehäuseunterteil 48 und ein Gehäuseoberteil 50 umfassen kann, durch welche eine Einführöffnung 52 des Aufnahmeraums 28 umfangsseitig begrenzt ist. Durch das Gehäuseunterteil 48 beziehungsweise eine derartige Unterschale und das Gehäuseoberteil 50 beziehungsweise eine derartige Oberschale sind Führungseinrichtungen beziehungsweise Führungskulissen 54 bereitgestellt, in welche der Verbindungssteg 34 in die Einführrichtung 26 eingeführt werden kann. Des Weiteren ist benachbart zu den Führungskulissen 54 in dem Gehäuse 12 eine jeweilige Durchtrittsöffnung 56 ausgebildet. Durch diese Durchtrittsöffnungen 56 kann der Schaft 42 der Schraube 44 (vergleiche Fig. 9) derart hindurchtreten, dass das Schraubgewinde 46, welches an dem Schaft 42 ausgebildet ist, in das als Innengewinde ausgebildete Schraubgewinde 38 eingeschraubt werden kann, welches auf Seiten des Filterelements 10 bereitgestellt ist.

Aus der Ansicht in Fig. 3 ist ersichtlich, dass die Durchtrittsöffnungen 56 und die Führungskulissen 54 jeweils zur einen Hälfte durch das Gehäuseunterteil 48 und zur anderen Hälfte durch das Gehäuseoberteil 50 bereitgestellt sind. Jedoch kann in Varianten des Luftfilters das Gehäuse 12 auch einstückig ausgebildet sein.

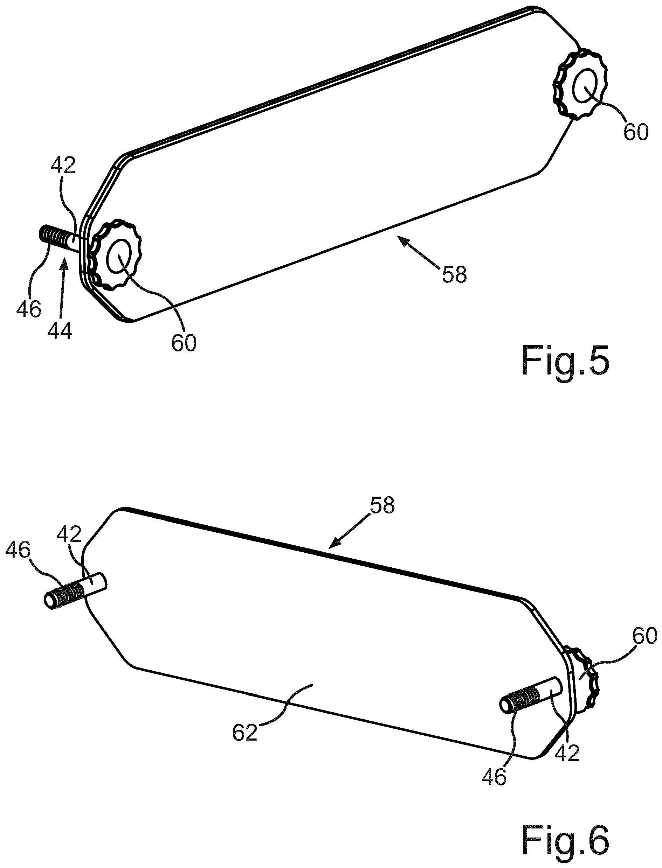

Fig. 5 zeigt perspektivisch ein Deckelelement beziehungsweise einen Deckel 58, mittels welchem sich die Einführöffnung 52 des Gehäuses 12 verschließen lässt. Zum Festlegen des Deckels 58 an dem Gehäuse 12 sind vorliegend jedoch die Halteelemente 36 erforderlich, welche durch das Filterelement 10 bereitgestellt sind. Bei der in Fig. 5 bis Fig. 10 gezeigten Variante des Luftfilters weist der Deckel 58 in jeweiligen seitlichen Randbereichen Durchtrittsöffnungen auf, durch welche der jeweilige Schaft 42 der beiden Schrauben 44 hindurchgeführt ist. Zum Drehen der Schrauben 44 kann an den Schrauben 44 ein beispielsweise manuell betätigbares Griffteil 60 vorgesehen sein. Das Griffteil 60 ist vorliegend nach Art eines Handrads ausgebildet.

Aus der Ansicht in Fig. 6 ist ersichtlich, wie der jeweilige Schaft 42 der Schrauben 44 drehbar in einem Grundkörper 62 des Deckels 58 aufgenommen ist.

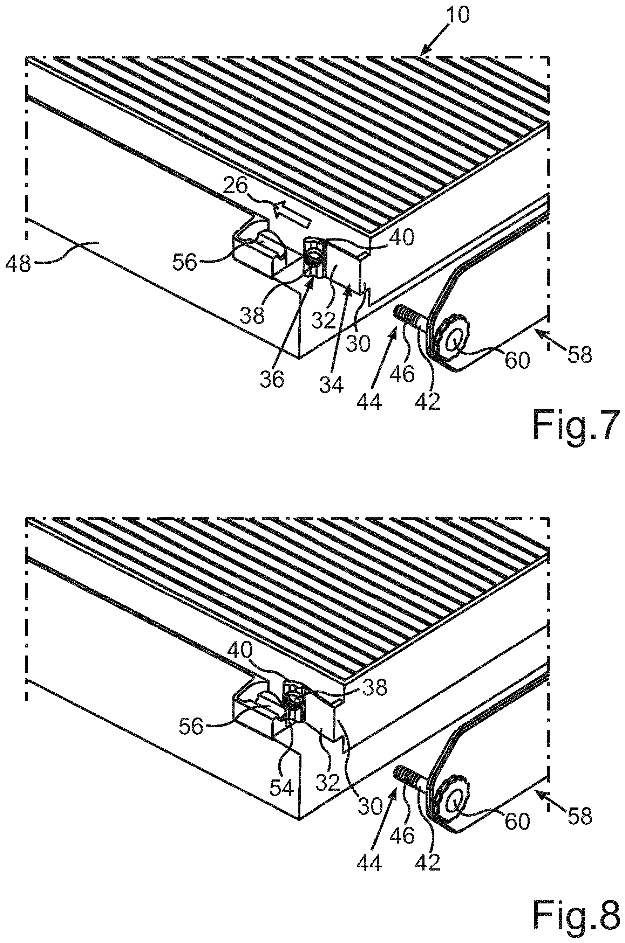

Fig. 7 bis Fig. 10 veranschaulichen eine Abfolge von Schritten bei der Montage des Filterelements 10 und des Deckels 58. Fig. 7 veranschaulicht hierbei einen ersten Schritt des Einführens des Filterelements 10 in das Gehäuse 12, wobei aus Gründen der Übersichtlichkeit lediglich das Gehäuseunterteil 48 gezeigt ist. Durch den Pfeil ist wiederum die Einführrichtung 26 veranschaulicht. In Fig. 7 und in Fig. 8 befindet sich der Endbereich 40 und mit diesem das Halteelement 36 mit dem Innengewinde 38 noch in seiner Ausgangsstellung (vergleiche Fig. 4), in welcher das Schraubgewinde 46 der Schraube 44 noch nicht in das Innengewinde 38 des Halteelements 36 eingeführt werden kann.

Fig. 8 veranschaulicht den Zustand während des weiteren Einführens des Filterelements 10, wobei der Endbereich 40 in die Führungskulisse 54 eintritt. Dementsprechend legt sich das Halteelement 36 beziehungsweise das Befestigungselement an die Führungskulisse 54 an.

Fig. 9 zeigt in einem nächsten Schritt, wie durch die gekrümmte Form der Führungskulisse 54, welche vorliegend zu einer Seite hin durch die Seitenwand 20 begrenzt ist, der Endbereich 40 mit dem Innengewinde 38 umgelenkt wird. Dieses Verbringen des Halteelements 36 aus der in Fig. 4 gezeigten Ausgangsstellung in die in Fig. 9 gezeigte Funktionsstellung des Halteelements 36 ist in Fig. 9 durch einen weiteren Pfeil 64 veranschaulicht.

Fig. 10 zeigt schließlich, wie die Schraube 44 mit dem Halteelement 36 verschraubt ist, sodass der Deckel 58 an dem Gehäuse 12 festgelegt ist. In der in Fig. 9 und Fig. 10 gezeigten Funktionsstellung des Halteelements 36 hintergreift das Halteelement 36 ein Gehäuseteil 66 des Gehäuses 12, in welchem die Durchtrittsöffnung 56 ausgebildet ist. Bei der Demontage zum Wechsel des Filterelements 10 werden zunächst die Schrauben 44 gelöst, sodass der Deckel 58 von dem Gehäuse 12 abgenommen, also von der Einführöffnung 52 entfernt werden kann. Anschließend kann das Filterelement 10 entgegen der Einführrichtung 26 aus dem Aufnahmeraum 28 herausgezogen werden. Hierbei bewegt sich das Halteelement 36 aufgrund der gekrümmten Formgebung der Führungskulisse 54 wieder aus der Funktionsstellung (vergleiche Fig. 9) in die Ausgangsstellung (vergleiche Fig. 4).

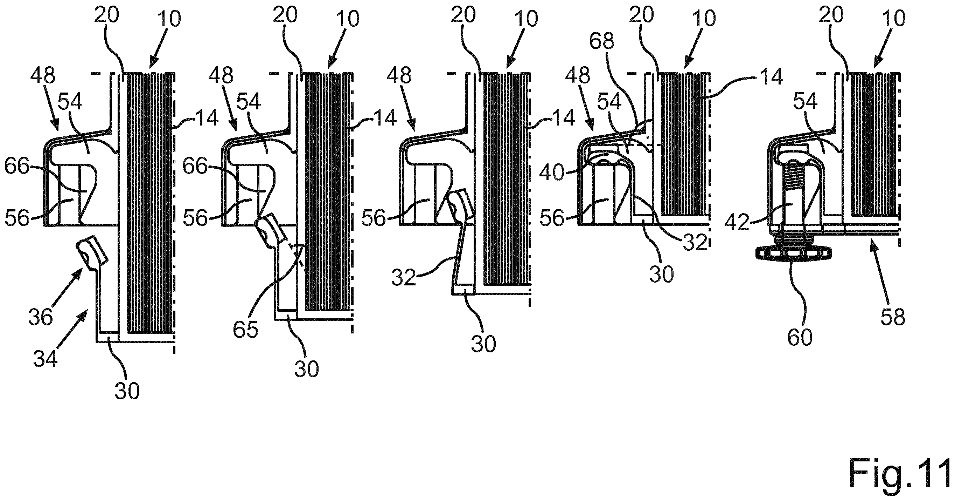

Anhand von Fig. 11 wird wiederum, und zwar in einer Draufsicht, das Einführen oder Einfädeln des Verbindungsstegs 34 in die Führungskulisse 54 veranschaulicht. Insbesondere aus dieser Darstellung ist ersichtlich, dass das Halteelement 36 in der Ausgangsstellung, also bevor das Halteelement 36 vollständig in die Führungskulisse 54 eingeführt ist, einen Winkel 65 mit der Seitenwand 20 bildet, welcher kleiner als 90 Grad ist, vorliegend sogar kleiner als 45 Grad ist. Eine Mittelebene des Halteelements 36, welche senkrecht zu einer Richtung ist, in welche der Schaft 42 der Schraube 44 in das Schraubgewinde 38 eingeführt werden kann, schließt folglich mit der Seitenwand 20 den Winkel 65 ein.

Mit dem Einführen des Verbindungsstegs 34 in die Führungskulisse 54 wird das Halteelement 36 zunächst näher zu der Seitenwand 20 hin bewegt. Hierbei wird die Lasche 32 des Verbindungsstegs 34 nahe dem Vorsprung oder Fortsatz 30 elastisch verformt. Anschließend wird mit zunehmendem Eindringen des Verbindungsstegs 34 in die Führungskulisse 54 das Halteelement 36 von der Führungskulisse 54 umgelenkt, sodass das in dem Endbereich 40 als Innengewinde ausgebildete Schraubgewinde 38 mit der Durchtrittsöffnung 56 fluchtet. Hierbei wird die Lasche 32 nahe dem Endbereich 40 elastisch verformt. In dieser Funktionsstellung ist das Halteelement 36 im Wesentlichen senkrecht zur Seitenwand 20 ausgerichtet. Dementsprechend schließt die durch den Endbereich 40 verlaufende Mittelebene mit der Seitenwand 20 einen rechten Winkel 68 ein. In dieser Ausrichtung des Halteelements 36 lässt sich die Schraube 44 in das Innengewinde 38 einschrauben, wie dies in der letzten Darstellung von Fig. 11 gezeigt ist.

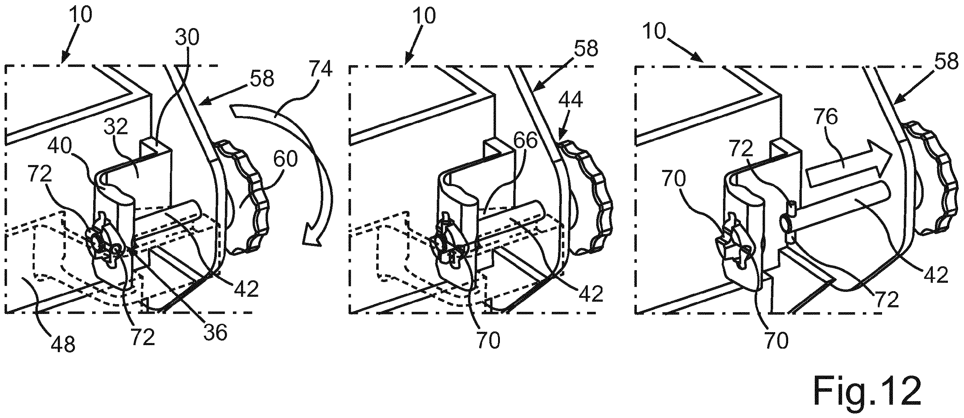

Bei der in Fig. 12 ausschnittsweise gezeigten Variante des Filterelements 10 und des Gehäuses 12, von welchem wiederum lediglich das Gehäuseunterteil 48 gezeigt ist, ist ebenfalls eine rotatorische Verriegelung des Deckels 58 zur Befestigung desselben an dem Gehäuse 12 vorgesehen. Hierbei ist in der in Fig. 12 linken Darstellung das auf Seiten des Deckels 58 vorgesehene Befestigungselement in der Stellung gezeigt, in welcher der Deckel 58 an dem Gehäuse 12 fixiert ist und dementsprechend der Deckel 58 die Einführöffnung 52 verschließt. Wiederum ist das Halteelement 36 in seine Funktionsstellung verbracht, in welcher es in dem rechten Winkel 68 zu der Seitenwand 20 angeordnet ist beziehungsweise den rechten Winkel 68 einnimmt. Jedoch ist bei dieser Variante in dem Endbereich 40, welcher sich an die flexible beziehungsweise elastisch verformbare Lasche 32 anschließt, kein Innengewinde ausgebildet, sondern eine jeweilige Aufnahme 70 für zwei Stifte 72, welche senkrecht von dem Schaft 42 der Schraube 44 beziehungsweise Befestigungsschraube abstehen.

Gemäß der in Fig. 12 linken Darstellung wird zunächst die Schraube 44 an dem Griffteil 60 gedreht, und zwar in eine Richtung, welche in Fig. 12 durch einen weiteren Pfeil 74 veranschaulicht ist. Dadurch werden die Stifte 72 aus ihren jeweiligen Aufnahmen 70 herausbewegt. Gemäß der in Fig. 12 mittleren Darstellung ist eine Hinterschnittigkeit aufgelöst beziehungsweise aufgehoben. Mit anderen Worten sind die Stifte 72 nicht mehr in ihren jeweiligen Aufnahmen 70 aufgenommen. Dies geschieht vorliegend durch Verdrehen des Schafts 42 beziehungsweise eines derartigen Schaftteils der als Befestigungselement dienenden Schraube 44 um ein Viertel einer vollen Umdrehung.

Anschließend kann der Schaft 42 aus dem Halteelement 36 abgezogen werden, wobei der Schaft 42 mit den Stiften 72 entlang der Durchtrittsöffnung 56 geführt ist, welche einerseits in dem Gehäuseunterteil 48 und andererseits in dem (in Fig. 12 nicht gezeigten) Gehäuseoberteil 50 ausgebildet ist. Dementsprechend arretiert der Deckel 58 nicht mehr das Filterelement 10, und der Deckel 58 kann abgenommen werden. Dieses Abnehmen des Deckels 58 von dem Gehäuse 12 ist in der rechten Darstellung in Fig. 12 durch einen weiteren Pfeil 76 veranschaulicht.

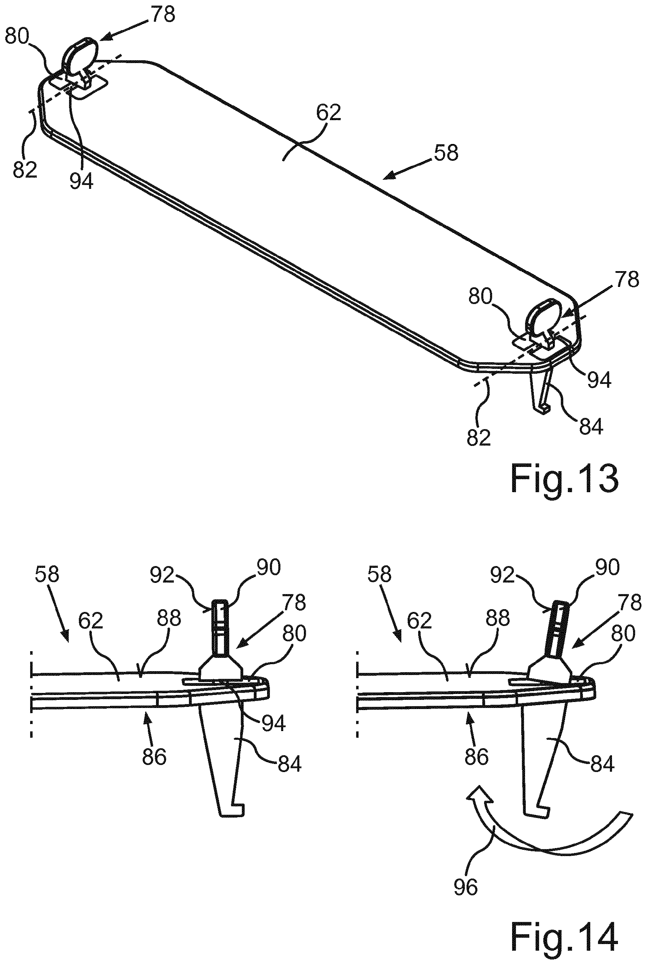

Fig. 13 zeigt eine weitere Variante zur Befestigung des Deckels 58. Hierbei sind in dem Grundkörper 62 des Deckels 58 Rastclipse 78 anstelle der Schrauben 44 angeordnet. Der jeweilige Rastclip 78, welcher eine translatorische Verriegelung ermöglicht, ist innerhalb einer Elastomerdichtung 80 angeordnet, welche in den Grundkörper 62 integriert ist. Die Elastomerdichtung 80 erlaubt ein Verschwenken beziehungsweise Verkippen des jeweiligen Rastclips 78 um eine Schwenkachse 82, welche in Fig. 13 schematisch dargestellt ist. Die Schwenkachse 82 verläuft senkrecht zu einer Längserstreckungsrichtung eines Schaftteils 84 des jeweiligen Rastclips 78 beziehungsweise Kipphebels.

Insbesondere aus Fig. 14 ist ersichtlich, dass das Schaftteil 84 über eine erste Seite 86 des Grundkörpers 62 übersteht. Die erste Seite 86 des Grundkörpers 62 des Deckels 58 ist dem Filterelement 10 zugewandt, wenn der Deckel 58 an das Gehäuse 12 montiert wird, um die Einführöffnung 52 des Aufnahmeraums 28 zu verschließen. Über eine gegenüberliegende Seite 88 des Grundkörpers 62 steht ein als Bedienelement 90 ausgebildeter Teil des Rastclips 78 hervor. Durch Drücken gegen eine Oberfläche 92 des Bedienelements 90 kann der Rastclip 78 um die Schwenkachse 82 verschwenkt werden. Über im Bereich der Schwenkachse 82 verlaufende Stege 94 ist der Rastclip 78 mit dem Grundkörper 62 des Deckels 58 verbunden. An die Stege 94 grenzt zu beiden Seiten der Stege 94 hin die Elastomerdichtung 80 an.

In der in Fig. 14 rechts gezeigten Darstellung ist der Rastclip 78 betätigt und dementsprechend um die Schwenkachse 82 verschwenkt. Hierbei verwinden sich die Stege 94, und die Elastomerdichtung 80 gibt nach. Ein Pfeil 96 veranschaulicht in der rechten Darstellung von Fig. 14 die Schwenkbewegung des betätigten Rastclips 78 um die Schwenkachse 82.

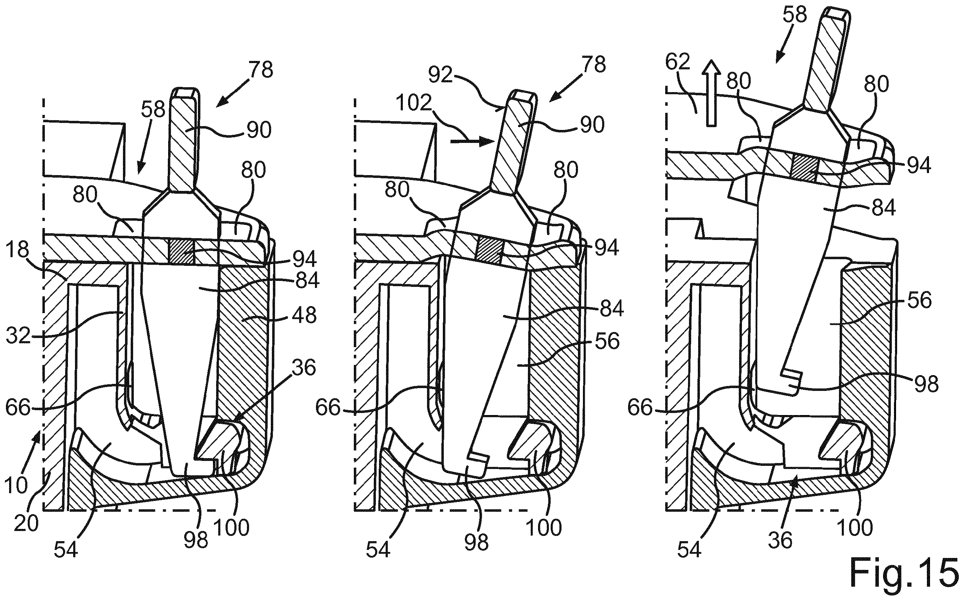

Anhand von Fig. 15 soll veranschaulicht werden, wie der Deckel 58 gemäß Fig. 13 von dem Gehäuse 12 gelöst beziehungsweise demontiert werden kann. Wiederum ist von dem Gehäuse 12 lediglich das Gehäuseunterteil 48 gezeigt. In der in Fig. 15 linken Darstellung ist eine Rastnase 98, welche an einem dem Bedienelement 90 gegenüberliegenden Ende des Schaftteils 84 ausgebildet ist, an einer Rastnase 100 eingehakt, welche an dem in seine Funktionsstellung verbrachten Halteelement 36 des Filterelements 10 ausgebildet ist. Ein Endbereich des Schaftteils 84, in welchem die Rastnase 98 ausgebildet ist, tritt durch eine Durchtrittsöffnung hindurch, welche in dem Halteelement 36 ausgebildet ist. In der Funktionsstellung ist wie in den zuvor beschriebenen Varianten des Filterelements 10 das Halteelement 36 im Wesentlichen senkrecht zu der Seitenwand 20 ausgerichtet.

Durch Drücken gegen das Bedienelement 90 in eine durch einen Pfeil 102 in der mittleren Darstellung von Fig. 15 angegebene Richtung werden die Rastelemente oder Rastnasen 98, 100 außer Eingriff gebracht. Mit anderen Worten löst das Rastelement in Form der auf Seiten des Deckels 58 vorgesehenen Rastnase 98 seine Hinterschnittigkeit auf. Daraufhin kann das Schaftelement oder Schaftteil 84 mit seiner Rastnase 98 durch die Durchtrittsöffnung 56 hindurchgeführt werden, welche in dem Gehäuse 12 durch das Gehäuseunterteil 48 und das (in Fig. 15 nicht gezeigte) Gehäuseoberteil 50 gebildet ist. Dementsprechend kann dann der Deckel 58 von dem Gehäuse 12 entfernt werden. Der Deckel 58 blockiert oder arretiert somit nicht mehr das Filterelement 10. Folglich kann nach dem Entfernen des Deckels 58 von dem Gehäuse 12 das Filterelement 10 entnommen werden. Hierbei bewegt sich das Halteelement 36 (der gekrümmten Kontur der zu einer Seite von der Seitenwand 20 begrenzten Führungskulisse 54 folgend) aus der in Fig. 15 gezeigten Funktionsstellung wieder in die Ausgangsstellung. Das Halteelement 36 erreicht die Ausgangsstellung, wenn das Halteelement 36 die Führungskulisse 54 verlassen hat.

An dem als Tauschteil ausgebildeten Filterelement 10 sind also bei den verschiedenen Varianten jeweils flexibel ausgestaltete, etwa durch Filmscharniere bereitgestellte Halteelemente 36 beziehungsweise Befestigungselemente angebracht, welche sich beim Einführen in das Gehäuse 12 an der Führungskulisse 54 ausrichten und in der Endlage das Gehäuseteil 66 hinterschnittig umfassen, in welchem die Durchtrittsöffnung 56 ausgebildet ist. Zugleich findet eine Kontrolle statt, ob das Filterelement 10 verbaut wurde, da eine Befestigung des Deckels 58 ohne das zuvor eingeführte Filterelement 10 nicht möglich ist. Denn erst bei in das Gehäuse 12 eingeführtem beziehungsweise verbauten Filterelement 10 lässt sich der Deckel 58 an dem Gehäuse 12 befestigen.

## Patentansprüche

1. Filterelement für einen Luftfilter eines Kraftwagens, mit einem Rahmenteil (16), welches ein Filtermaterial (14) des Filterelements (10) zumindest bereichsweise umgibt, wobei das Filterelement (10) in einen Aufnahmeraum (28) einbringbar ist, welcher durch ein Gehäuse (12) des Luftfilters bereitgestellt ist,
**dadurch gekennzeichnet, dass**
das Filterelement (10) wenigstens ein Halteelement (36) aufweist, welches durch das Einbringen des Filterelements (10) in den Aufnahmeraum (28) aus einer Ausgangsstellung in eine Funktionsstellung verbringbar ist, in welcher wenigstens ein Befestigungselement (44, 78), welches zum Festlegen eines dem Verschließen einer Einführöffnung (52) des Aufnahmeraums (28) dienenden Deckelelements (58) an dem Gehäuse (12) ausgebildet ist, an dem wenigstens einen Halteelement (36) fixierbar ist.

2. Filterelement nach Anspruch 1,
**dadurch gekennzeichnet, dass**
das wenigstens eine Halteelement (36) mittels eines flexiblen Verbindungsstegs (34) an dem Rahmenteil (16) gehalten ist, wobei durch ein, insbesondere elastisches, Verformen des Verbindungsstegs (34) das wenigstens eine Halteelement (36) aus der Ausgangsstellung in die Funktionsstellung verbringbar ist.

3. Filterelement nach Anspruch 1 oder 2,
**dadurch gekennzeichnet, dass**
das wenigstens eine Halteelement (36) in der Ausgangsstellung einen ersten Winkel (65) mit einer Seitenwand (20, 22) des Rahmenteils (16) bildet, welche sich in eine Einführrichtung (26) des Filterelements (10) erstreckt, in welche das Filterelement (10) in den Aufnahmeraum (28) einbringbar ist, wobei das wenigstens eine Halteelement (36) in der Funktionsstellung einen zweiten Winkel (68) mit der Seitenwand (20, 22) bildet, welcher größer ist als der erste Winkel (66).

4. Filterelement nach Anspruch 3,
**dadurch gekennzeichnet, dass**
das wenigstens eine Halteelement (36) in der Funktionsstellung im Wesentlichen senkrecht zu der Seitenwand (20, 22) ausgerichtet ist.

5. Filterelement nach einem der Ansprüche 1 bis 4,
**dadurch gekennzeichnet, dass**
das wenigstens eine Halteelement (36) ein Innengewinde (38) aufweist.

6. Filterelement nach einem der Ansprüche 1 bis 5,
**dadurch gekennzeichnet, dass**
das wenigstens eine Halteelement (36) eine Aufnahme (70) für zumindest einen an dem Befestigungselement (44, 78) ausgebildeten Stift (72) aufweist.

7. Filterelement nach einem der Ansprüche 1 bis 6,
**dadurch gekennzeichnet, dass**
das wenigstens eine Halteelement (36) ein Rastelement (100) für ein korrespondierendes Rastelement (98) des Befestigungselements (44, 78) aufweist.

8. Luftfilter für einen Kraftwagen, mit einem Filterelement (10) nach einem der Ansprüche 1 bis 7, wobei das Filterelement (10) in einen Aufnahmeraum (28) eingebracht ist, welcher durch ein Gehäuse (12) des Luftfilters bereitgestellt ist, wobei durch das Fixieren wenigstens eines Befestigungselements (44, 78) an dem wenigstens einen Halteelement (36) des Filterelements (10) ein Deckelelement (58) an dem Gehäuse (12) festgelegt ist, wobei mittels des Deckelelements (58) eine Einführöffnung (52) des Aufnahmeraums (28) verschlossen ist.

9. Luftfilter nach Anspruch 8,
**dadurch gekennzeichnet, dass**
das Deckelelement (58) als separate, vor einem Entnehmen des Filterelements (10) aus dem Aufnahmeraum (28) von der Einführöffnung (52) entfernbare Verschlusseinrichtung für den Aufnahmeraum (28) ausgebildet ist.

10. Luftfilter nach Anspruch 8 oder 9,
**dadurch gekennzeichnet, dass**
das Gehäuse (12) wenigstens eine Führungseinrichtung (54) aufweist, wobei durch Einführen des wenigstens einen Halteelements (36) in die wenigstens eine Führungseinrichtung (54) das wenigstens eine Halteelement (36) aus der Ausgangsstellung in die Funktionsstellung verbringbar ist.

11. Luftfilter nach einem der Ansprüche 8 bis 10,
**dadurch gekennzeichnet, dass**
das wenigstens eine Halteelement (36) in der Funktionsstellung ein Gehäuseteil (66) des Gehäuses (12) hintergreift, wobei in dem Gehäuseteil (66) eine Durchtrittsöffnung (56) ausgebildet ist, und wobei ein Schaftteil (42, 84) des wenigstens einen Befestigungselements (44, 78) durch die Durchtrittsöffnung (54) hindurchgeführt ist, wenn das wenigstens eine Befestigungselement (44, 78) an dem wenigstens einen Halteelement (36) fixiert ist.

12. Luftfilter nach Anspruch 11,
**dadurch gekennzeichnet, dass**
das Schaftteil (42, 84) ein Schraubgewinde (46) und/oder zumindest einen durch Drehen des Schaftteils (42, 84) in eine Aufnahme (70) einbringbaren Stift (72) aufweist und/oder das Schaftteil (42, 84) um eine Schwenkachse (82) verschwenkbar ist, welche senkrecht zu einer Längserstreckungsrichtung des Schaftteils (42, 84) verläuft, wobei durch das Verschwenken des Schaftteils (42, 84) um die Schwenkachse (82) das Befestigungselement (44, 78) in eine Freigabestellung bewegbar ist, in welcher die Fixierung des Befestigungselements (44, 78) an dem Halteelement (36) aufgehoben ist.

## Claims

1. Filter element for an air filter of a motor vehicle, having a frame part (16), which surrounds at least a section of a filter material (14) of the filter element (10), wherein the filter element (10) can be installed into a reception space (28) provided by a housing (12) of the air filter
**characterised in that**
the filter element (10) has at least one holding element (36), which can be moved from a starting position into a functional position, in which at least one fastening element (44, 78) formed at the housing (12) for fixing a cover element (58) used for closing an insertion opening (52) of the reception space (28) can be fixed to the at least one holding element (36).

2. Filter element according to claim 1,
**characterised in that**
the at least one holding element (36) is held at the frame part (16) by means of a flexible connecting web (34), wherein the at least one holding element (36) can be moved from the starting position into the functional position by an in particular elastic deformation of the connecting web (34).

3. Filter element according to claim 1 or 2,
**characterised in that**
the at least one holding element (36) forms in the starting position a first angle (65) with a side wall (20, 22) of the frame part (16), which extends in an insertion direction (26) of the filter element (10), in which the filter element (10) can be installed into the reception space (28), wherein the at least one holding element (36) forms in the functional position a second angle (68) greater than the first angle (65) with the side wall (20, 22).

4. Filter element according to claim 4,
**characterised in that**
the at least one holding element (36) is oriented substantially perpendicular to the side wall (20, 22) in the functional position.

5. Filter element according to any of claims 1 to 4,
**characterised in that**
the at least one holding element (36) has a female thread (38).

6. Filter element according to any of claims 1 to 5,
**characterised in that**
the at least one holding element (36) has a receptacle (70) for at least one pin (72) formed at the fastening element (44, 78).

7. Filter element according to any of claims 1 to 6,
**characterised in that**
the at least one holding element (36) has a latching element (100) for a corresponding latching element (98) of the fastening element (44, 78).

8. Air filter for a motor vehicle, having a filter element (10) according to any of claims 1 to 7, wherein the filter element (10) is installed into a reception space (28) provided by a housing (12) of the air filter, wherein a cover element (58) is fixed to the housing (12) by fixing at least one fastening element (44, 78) to the at least one holding element (36) of the filter element (10), wherein an insertion opening (52) of the reception space (28) is closed by means of the cover element (58).

9. Air filter according to claim 8,
**characterised in that**
the cover element (58) is designed as a separate closing device for the reception space (28), which can be removed from the insertion opening (52) before the filter element (10) is removed from the reception space (28).

10. Air filter according to claim 8 or 9,
**characterised in that**
the housing (12) has at least one guide device (54), wherein the at least one holding element (36) can be moved from the starting position into the functional position by inserting the at least one holding element (36) into the at least one guide device (54).

11. Air filter according to any of claims 8 to 10,
**characterised in that**
the at least one holding element (36) engages a housing part (66) of the housing (12) from behind in the functional position, wherein a through-opening (56) is formed in the housing part (66), and wherein a shank part (42, 84) of the at least one fastening element (44, 78) passes through the through-opening (54) when the at least one fastening element (44, 78) is fixed to the at least one holding element (36).

12. Air filter according to claim 11,
**characterised in that**
the shank part (42, 84) has a screw thread (46) and/or at least one pin (72), which can be moved into a receptacle (70) by rotating the shank part (42, 84), and/or **in that** the shank part (42, 84) can be pivoted about a pivot axis (82) extending perpendicularly to a longitudinal direction of the shank part (42, 84), wherein the fastening element (44, 78) can be moved into a release position in which the fixing of the fastening element (44, 78) at the holding element (36) is cancelled by pivoting the shank part (42, 84) about the pivot axis (82).

## Revendications

1. Élément filtrant pour un filtre à air d'un véhicule automobile, comprenant une partie cadre (16) qui entoure un matériau filtrant (14) de l'élément filtrant (10) au moins à certains endroits, l'élément filtrant (10) pouvant être placé dans une chambre de réception (28), qui est obtenue par un boîtier (12) du filtre à air,
**caractérisé en ce que**
l'élément filtrant (10) présente au moins un élément de retenue (36) qui, lorsque l'élément filtrant (10) est placé dans la chambre de réception, peut passer d'une position de sortie à une position de fonctionnement, dans laquelle au moins un élément de fixation (44, 78) conçu pour fixer un élément de recouvrement (58) servant à fermer une ouverture d'introduction (52) de la chambre de réception (28), peut être fixé sur ledit élément de retenue (36).

2. Élément filtrant selon la revendication 1, **caractérisé en ce que** ledit élément de retenue (36) est retenu au moyen d'un élément de liaison souple (34) sur la partie cadre (16), par une déformation, notamment, élastique, de l'élément de liaison (4), ledit élément de retenue (36) peut être passé de la position de sortie à la position de fonctionnement.

3. Élément filtrant selon la revendication 1 ou la revendication 2, **caractérisé en ce que** ledit élément de retenue (36) forme dans la position de sortie un premier angle (65) avec une paroi latérale (20, 22) de la partie cadre (16), qui s'étend dans une direction d'insertion (26) de l'élément filtrant (10), dans laquelle l'élément filtrant (10) peut s'insérer dans la chambre de réception (28), ledit élément de retenue (36) formant dans la position de fonctionnement un second angle (68) avec la paroi latérale (20, 22) qui est supérieur au premier angle (66).

4. Élément filtrant selon la revendication 3, **caractérisé en ce que** ledit élément de retenue (36) est orienté dans la position de fonctionnement sensiblement perpendiculairement à la paroi latérale (20, 22).

5. Élément filtrant selon l'une quelconque des revendications 1 à 4, **caractérisé en ce que** ledit élément de retenue (36) présente un filet intérieur (38).

6. Élément filtrant selon l'une quelconque des revendications 1 à 5, **caractérisé en ce que** ledit élément de retenue (36) présente un logement (70) pour au moins une tige (72) conçue sur l'élément de fixation (44, 78).

7. Élément filtrant selon l'une quelconque des revendications 1 à 6, **caractérisé en ce que** ledit élément de retenue (36) présente un élément d'encliquetage (100) pour un élément d'encliquetage correspondant (98) de l'élément de fixation.

8. Filtre à air pour un véhicule automobile, comprenant un élément filtrant (10) selon l'une quelconque des revendications 1 à 7, l'élément filtrant (10) étant inséré dans une chambre de réception (28) qui est obtenue par un boîtier (12) du filtre à air, la fixation d'au moins un élément de fixation (44, 78) sur ledit élément de retenue (36) de l'élément filtrant (10) permet de fixer un élément de recouvrement (58) sur le boîtier (12), un élément de recouvrement (58) permettant de fermer une ouverture d'insertion (52) de la chambre de réception (28).

9. Filtre à air selon la revendication 8, **caractérisé en ce que** l'élément de recouvrement (58) est conçu sous la forme d'un dispositif de fermeture séparé pouvant être retiré de l'ouverture d'insertion (52) avant le retrait de l'élément filtrant (10) de la chambre de réception (28).

10. Filtre à air selon la revendication 8 ou la revendication 9, **caractérisé en ce que** le boîtier (12) présente au moins un dispositif de guidage (54), l'insertion dudit élément de retenue (36) dans ledit dispositif de guidage (54) permet de faire passer ledit élément de retenue (36) de la position de sortie à la position de fonctionnement.

11. Filtre à air selon l'une quelconque des revendications 8 à 10, **caractérisé en ce que** dans la position de fonctionnement ledit élément de retenue (36) vient en prise par l'arrière avec une partie (66) du boîtier (12), dans la partie (66) du boîtier étant ménagée une ouverture de passage, et une partie tige (42, 84) dudit élément de fixation (44, 78) étant introduite dans l'ouverture de passage (54) lorsque ledit élément de fixation (44, 78) est fixé sur ledit élément de retenue (36).

12. Filtre à air selon la revendication 11, **caractérisé en ce que** la partie tige (42, 84) présente un filet de vissage (46) et/ou au moins une tige (72) pouvant être placée dans un logement (70) par rotation de la partie tige (42, 84) et/ou **en ce que** la partie tige (42, 84) peut pivoter autour d'un axe de pivotement (82) qui s'étend perpendiculaire à la direction longitudinale de la partie tige (42, 84), le pivotement de la partie tige (42, 84) autour de l'axe de pivotement (82) permettant de déplacer l'élément de fixation (44, 78) dans une position de libération, libérant ainsi l'élément de fixation (44, 78) de l'élément de retenue (36).
